# EUROPÄISCHE PATENTSCHRIFT

(11) **EP 2 426 264 B1**
(45) Veröffentlichungstag und Bekanntmachung des Hinweises auf die Patenterteilung: **11.11.2015**
(21) Anmeldenummer: 11007105.7
(22) Anmeldetag: 01.09.2011
(51) Int. Cl.: E02D 29/12, B64F 1/28

(54) **Gehäuse**
Casing
Boîtier

(30) Priorität: 03.09.2010 DE 102010044303
(43) Veröffentlichungstag der Anmeldung: 07.03.2012
(73) Patentinhaber: Norbert Schütz GmbH & Co. KG, 87737 Boos (DE)
(72) Erfinder: Schütz, Norbert, 87737 Boos (DE)
(74) Vertreter: Pfister, Stefan Helmut Ulrich

(56) Entgegenhaltungen:
- DE-A1- 10 311 624
- DE-B3-102006 022 162
- DE-U1- 29 912 370
- JP-A- 9 041 407

## Beschreibung

Die Erfindung betrifft ein Gehäuse, insbesondere Außengehäuse bzw. Schacht für Multifunktionsarmaturen, Unterflurarmaturen wie z.B. Unterflurhydranten oder dergleichen.

Derartige Gehäuse werden im unterirdischen Bereich bzw. Unterflurbereich eingesetzt und zwar immer dann, wenn entsprechende Armaturen wie Absperrarmaturen oder Hydranten beispielsweise im Erdboden eingebaut werden müssen. Die entsprechenden Armaturen und/oder Leitungen, an denen Armaturen angeschlossen werden sollen, liegen in unterschiedlicher Tiefe im Erdboden, so dass es notwendig ist, die entsprechenden Armaturen jeweils an dieses Niveau anzupassen, damit eine leichte Bedienbarkeit gegeben ist. Dazu sind beispielsweise höhenverstellbare Unterflurhydranten bekannt. Das Problem ist allerdings, dass man für jeden speziellen Einsatzfall entsprechende Unterflurarmaturen zur Verfügung haben muss, d.h. man hat einen relativ großen Aufwand, um diese Armaturen vorzuhalten. Des weiteren ist zu beachten, dass derartige Unterflurarmaturen häufig im Gehwegoder Straßenbereich installiert werden müssen, weshalb eine Überfahrbarkeit der Abdeckelemente der Armaturen gewährleistet werden muss. Dies fordert wiederum einen erheblichen Aufwand.

Aus der Druckschrift G 93 06 443.8 ist ein Erdschacht für unterirdische Leitungen oder Kanäle bekannt. Dieser besteht aus wenigstens zwei teilweise ineinander geführten Schachtrohren aus gegossenem Beton oder Metall, von denen das innerste Schachtrohr gegenüber dem oder den anderen Schachtrohren durch relatives Verdrehen schiefer Flächen höheneinstellbar ist und den oberen, mit einer Verkehrs-, insbesondere Straßenfläche, bündig abschließenden Schachtabschluss bildet, der mit einer Ringnut oder einem Ringfalz zur Aufnahme eines Deckels versehen ist. Dieser Erdschacht soll sich dadurch auszeichnen, dass die schiefen Flächen als Gewindegänge des einen Schachtrohres ausgebildet sind, in welche verdrehbare Verstellzapfen eingreifen, die mit dem jeweils anderen Schachtrohr verbunden sind.

Aus der Druckschrift DE 10 2006 022 162 B3 ist ein Unterflurhydrant zur Wasseraufnahme aus einem Leitungsrohr bekannt. Dieser Unterflurhydrant weist ein zumindest zweiteiliges Steigrohr auf, das mittels eines aus einem Außenrohr teleskopierbaren Innenrohres an unterschiedliche Einbaulagen anpassbar ist. Um eine einfache Anpassung des Hydranten an die Einbaulage zu ermöglichen, ist das Steigrohr mit einer dieses zumindest teilweise umfassenden Schachthülle verbunden.

Aus der Druckschrift DE 299 12 370 ist ein Unterflurhydrantengehäuse bekannt, das einen Innenraum umschließt, einen befahrbaren Deckel und einen Boden aufweist, wobei der Boden mit einer Rohrdurchführungsöffnung versehen ist. Diese Gehäuse soll sich dadurch auszeichnen, dass ein Innengehäuse und ein Außengehäuse vorgesehen sind, die teleskopartig ineinander greifen und in einer ersten Richtung teleskopierend und in einer zweiten Richtung parallel zu einer Ebene, auf der die erste Richtung senkrecht steht, relativ zueinander bewegbar sind.

In der Druckschrift DE 103 11 624 A1 wird eine Einbauanordnung für Unterflurhydranten vorgeschlagen, mit welcher ein Unterflurhydrant im Tiefbau verlegt wird, wobei um den Unterflurhydranten eine ihm zugeordnete Schachthülle vorgesehen wird. Die Schachthülle ist so ausgebildet, dass die obere Schachthülle über die untere Schachthülle geschoben werden kann, wobei eine Abdichtung am Flansch der oberen Schachthülle vorgesehen ist.

Ausgehend von diesem Stand der Technik ist es Aufgabe der Erfinder, ein universelles Gehäuse für insbesondere Unterflurarmaturen mit verbesserten Gebrauchseigenschaften zur Verfügung zu stellen, das einen Einsatz an unterschiedlichen Einbaurorten mit unterschiedlichem Geländeniveau ermöglicht und das insbesondere auch den universellen Einsatz von unterschiedlichsten Unterflurarmaturen bzw. Multifunktionsarmaturen ermöglicht.

Die Aufgabe der Erfindung wird gelöst durch ein Gehäuse, insbesondere Außengehäuse bzw. Schacht für Multifunktionsarmaturen, Unterflurarmaturen, wie z.B. Unterflurhydranten oder dergleichen, wobei das Gehäuse beim Einbau stufenlos an das Niveau des Einbauortes bzw. Einbaugeländes anpassbar ist, bestehend aus wenigstens zwei ineinander schiebbaren, vorzugsweise teleskopierbaren und rohrförmig ausgebildeten Gehäusemantelelementen, wenigstens einer in Einbaurichtung nach unten weisenden Anschlussplatte und wenigstens einem in Einbaurichtung nach oben weisenden Schachtdeckel und/oder Flansch, der den Schachtdeckel aufnimmt. Durch ein derartiges Gehäuse gelingt es, dass erstens die unterschiedlichsten Multifunktionsarmaturen oder Einzelarmaturen, wie beispielsweise Unterflurhydranten oder dergleichen eingesetzt werden können in einem Gehäuse, welches universell dafür ausgebildet ist, derartige Multifunktionsarmaturen aufzunehmen und welches teleskopierbar ist, weshalb es problemlos an das Höhen- beziehungsweise Tiefenniveau des Einbauortes anpassbar ist. Man benötigt dafür jetzt nicht mehr unterschiedliche Varianten von Gehäusen, sondern es reicht aus, wenn man verschiedene Gehäusegrößen für unterschiedliche Armaturen zur Verfügung hat. Die Palette dafür ist aber nach der Erfindung relativ gering gestaltbar. Selbstverständlich genügt es auch, wenn man nur ein ausreichend großes Gehäuse zur Verfügung hat, welches alle Armaturen aufzunehmen vermag. Dabei ist insbesondere die Teleskopierbarkeit so, dass die Gehäusemantelelemente teleskopartig ineinander schiebbar sind, so dass eine problemlose Anpassung an ein einmal vorbestimmtes Niveau möglich ist. Die Teleskopierbarkeit gewährleistet allerdings auch, dass später beispielsweise bei Reparaturarbeiten veränderte Niveaubedingungen problemlos durch eine Anpassung des Gehäuses in der Höhe ausgeglichen werden können. Die Anschlussplatte, die in Einbaurichtung unten vorgesehen ist, ist dabei mit entsprechenden Anschlussmöglichkeiten versehen, so dass universell unterschiedlichste Lösungen realisiert werden können. Die Erfindung stellt dem zufolge ein Gehäuse zur Verfügung, welches problemlos in unterschiedlichsten Bereichen im Unterflurarmaturbereich bzw. im Unterflurhydrantenbereich einsetzbar ist und welches insbesondere geeignet ist, auch nach dem bereits einmal erfolgten Einbau immer noch an geänderte Bedingungen anpassbar zu sein.

Demzufolge weist bei dem Gehäuse nach der Erfindung die Anschlussplatte wenigstens eine Schnittstelle zum Ankoppeln bzw. Anschließen zumindestens eines Teiles einer Unterflurarmatur auf. Diese Schnittstelle ist dabei universell so gestaltet, dass die unterschiedlichsten Armaturen dort anschließbar sind. Die speziellen Ausgestaltungen dafür werden später noch ausführlicher beschrieben. Durch das Schaffen der Schnittstelle ist es möglich, einen universellen Einsatz des erfindungsgemäßen Gehäuses zu gewährleisten. Die Schnittstelle ist dabei an unterschiedlichste Bedingungen und an unterschiedlichste Armaturen anpassbar. Die Schnittstelle kann dabei alternativ entweder auf der nach unten, zur Medienleitung weisenden Seite oder auf der nach oben, in das Gehäuse weisenden Seite, insbesondere aber auch auf beiden Seiten angeordnet sein. Alle Lösungen des Standes der Technik haben den weiter vorn bereits beschriebenen Nachteil, wonach für jedes unterschiedliche Leitungsformat beziehungsweise jede unterschiedliche Leitungsgröße auch ein unterschiedlicher Anschluss beziehungsweise ein unterschiedliches Gehäuse vorgehalten werden muss. Die Erfindung löst dies durch eine universelle Schnittstelle für den Anschluss beziehungsweise die Aufnahme unterschiedlicher Unterarmaturen. Dadurch muss man nicht, wie im Stand der Technik unterschiedlichste Gehäuse vorhalten. Keine der eingangs genannten Druckschriften des Standes der Technik stellt eine solche Lösung vor oder legt diese nahe. Vielmehr sind die Lösungen des Standes der Technik durch einen komplizierten Aufbau gekennzeichnet, der insbesondere für jede unterschiedliche Unterflurarmatur auch unterschiedliche Gehäuse beziehungsweise Gehäuse mit entsprechenden Anschlusselementen benötigt. Des Weiteren sind die Lösungen im Stand der Technik sehr störanfällig, insbesondere, wenn ein späteres Angleichen an ein verändertes Höhenniveau des umgebenden Erdreiches vorgenommen werden muss. Demzufolge wird der Bevorratungsaufwand für die Betreiber und/oder die einbauenden Firmen enorm hoch. Das erfindungsgemäße Gehäuse lässt sich dabei unabhängig von den jeweiligen Unterflurarmaturen verwenden. Aufgrund der universell gestalteten Schnittstelle ist dies problemlos möglich.

Ein weiterer Aspekt ist dadurch angegeben, dass die Gehäusemantelelemente, welche ineinanderschiebbar sind, aus korrosionsbeständigem Material wie z.B. Kunststoff, vorzugsweise aus Polyethylen oder PVC gebildet sind. Durch den Einsatz eines solchen Materials, was im Gegensatz zu den bisher eingesetzten Materialien steht, gelingt es, die Korrosion insbesondere an dem Außengehäuse, d.h. auf der dem Erdreich zugewandten Seite komplett zu verhindern. Dies gewährleistet auch eine spätere Verschiebbarkeit bzw. Ineinanderschiebbarkeit oder Außeinanderziehbarkeit über viele Jahre. Das Material, welches Korrosion verhindert bzw. korrosionsbeständig ist, bietet daher die Möglichkeit, derartige Gehäuse auch nach vielen Jahren in ihrem Einbauniveau nochmals anzupassen bzw. zu verändern. Dies bieten beispielsweise Lösungen, wie sie im Tiefbau bisher eingesetzt wurden, nämlich vorrangig Guss- bzw. Stahlummantelte Armaturen nicht. Diese korrodieren nach kurzer Zeit derart, dass durch die Korrosion eine nahezu unlösbare Verbindung von möglicherweise ineinanderschiebbaren Elementen entsteht, so dass ein späteres Anpassen an geänderte Bedingungen nicht mehr möglich oder nur noch mit äußerst hohem Aufwand möglich ist. Die Erfindung löst dieses Problem in hervorragender Weise, indem beispielsweise das Material Polyethylen oder PVC auch nach vielen Jahren an der Oberfläche, selbst beim Anfüllen von Kies oder Erdmaterial, welches in der Regel im Erdreich feucht ist, keine Korrosion aufweist. Damit lässt sich ein solches Gehäuse auch noch nach vielen Jahren leicht auseinanderziehen bzw. ineinanderschieben.

Die Erfindung zeichnet sich entsprechend einer weiterbildung dadurch aus, dass die Schnittstelle an der Anschlussplatte als Anschlussflansch, Schraubverbindung, Bajonettanschluss oder dergleichen ausgebildet ist. Dabei ist diese Schnittstelle selbstverständlich so, dass an den Anschlussflansch beziehungsweise die Schraubverbindung beziehungsweise auch an dem Bajonettanschluss jeweils Reduzierstücke und/oder Erweiterungsstücke anschließbar sind, so dass man jeweils zur vorgefundenen Situation im Armaturen- beziehungsweise Anschlussbereich eine passende Schnittstelle schaffen kann Dadurch ist es gegeben, dass universell unterschiedlichste Armaturen anschließbar sind. Demzufolge ist die Schnittstelle auch für den Anschluss beziehungsweise die Aufnahme unterschiedlicher Unterflurarmaturen universell ausgebildet. Die Armaturen sind dazu mit entsprechend korresondierend ausgebildeten schnittstellen versehen, so dass ein Austausch von entsprechenden Armaturen problemlos möglich ist. Auch ist es möglich, in das Gehäuse nach der Erfindung eben nicht nur eine spezielle Unterflurarmatur einzubauen, sondern es ist möglich, die unterschiedlichsten Armaturen hier einzubauen. Demzufolge wird der Aufwand für das Vorhalten von entsprechenden Gehäusen für die Unterflurarmaturen deutlich geringer.

Des Weiteren ist es möglich, bei notwendigen Wartungs- und/oder Bedienarbeiten problemlos an die Armatur heranzukommen. Die Armatur muß in ihrer Höhe nicht verändert werden, da ja das Gehäuse veränderbar ist. Damit kann sich beim Einbau von Unterflurarmaturen, wie beispielweise Unterflurhydranten, darauf beschränken, das Gehäuse entsprechend an die Höhe des Erdreiches beziehungsweise Erdbodenniveaus anzupassen und bei dem Hydranten einen nicht höhenverstellbaren Hydranten mit wesentlich geringerem Kostenaufwand einzusetzen.

Ein weiterer vorteil der Erfindung ist dadurch angegeben, dass der Quotient aus der Gehäusehöhe und dem Durchmesser der Anschlussplatte zwischen 0,5 bis 5, vorzugsweise zwischen 1,5 und 2,5, oder 1 und 1,5 beträgt. Dadurch gelingt es, die Systembreite des vorgehaltenen Gehäuses beziehungsweise der vorzuhaltenden Gehäuse im Servicebereich zu verringern. Auch für die Herstellung dieser Gehäuse ist dies von Vorteil, da nicht so viele Varianten mit unterschiedlichsten Fertigungswerkzeugen und -mitteln hergestellt werden müssen.

Die Anschlussplatte, die die Schnittstelle trägt, ist vorzugsweise aus Edelstahl oder aus korrosionsgeschütztem Blech oder einem Kunststoffmaterial, wie zum Beispiel aus faserverstärktem Kunststoff gebildet. Dies gewährleistet, dass auch die Anschlussplatte vor Korrosionen geschützt ist und nicht zusätzlich mit einem Korrosionsschutz versehen werden muß.

Bezüglich der Form des Gehäuses ist dieses nicht auf eine bestimmte Form eingeschränkt, obwohl die runde Form bevorzugt ist. Demzufolge kann das Gehäuse nach der Erfindung einen runden, eckigen, einen quadratischen oder rechteckigen beziehungsweise einen ovalen Querschnitt aufweisen.

Eine bevorzugte Ausgestaltung der Erfindung schlägt vor, dass die Anschlussplatte rund beziehungsweise kreisförmig ausgebildet ist und einen Durchmesser zwischen 400 mm bis 1300 mm aufweist. In diesem Maßbereich sind selbstverständlich bestimmte Abstufungen beziehungsweise Raster möglich. Bevorzugt wird man dabei die weiter vorn genannten Quotienten von Gehäusehöhe und Durchmesser zum Ansatz bringen, um unterschiedliche Gehäuse vorzuhalten.

Die Gehäusehöhe liegt in einem Bereich zwischen 700 mm bis 2000 mm. Dies deckt den eigentlichen Bereich von Unterflurhydranten beziehungsweise Unterflurarmaturen ab, da diese in der Regel nicht niedriger als 700 mm, aber auch nicht tiefer als 2000 mm eingebaut werden. Im bindigen Erdbodenbereich wird ein solches Gehäuse mindestens 800 mm betragen müssen, wenn nicht sogar bis zu 1200 mm, um einen entsprechenden Frostschutz zu gewährleisten. Dazu kann es auch notwendig sein, dass man in dem oberen Bereich des Gehäuses eine Abdeckung vornimmt, die beispielsweise aus wärmedämmendem Material, wie Styropor oder PUR gebildet ist. Dadurch wird der Frostschutz der Armatur erheblich verbessert. Auch hier ist die Erfindung selbstverständlich entsprechend variabel.

Der Außendurchmesser des oberen Gehäusemantelelementes ist entsprechend einer Weiterbildung der Erfindung dem Innendurchmesser des unteren Gehäusemantelelementes derart angepasst, dass das obere Gehäusemantelelement mit einem geringen Spiel, jedoch selbsthemmend, einschiebbar ist. Das Spiel ist dabei so gering, dass beim Einschieben beziehungsweise Auseinanderziehen noch eine gewisse Kraft aufgewendet werden muß, um die jeweils gewünschte Länge beziehungsweise Höhe des Gehäuses einzustellen. Wirkt jedoch keine Kraft auf das oder die Gehäusemantelelemente, wird aufgrund der Selbsthemmung eine Verstellung nicht mehr erfolgen. Dies kann in der einfachsten Variante so geschehen, dass der Außendurchmesser des oberen Gehäusemantelelementes dem Innendurchmesser des unteren Gehäusemantelelementes nahezu entspricht, indem dort ein nur sehr geringes Spiel vorzusehen ist. Aufgrund der Plattenoberfläche, die durch das Material gegeben ist, ist es jetzt auch möglich, bei späteren Anpassungen die Gehäusemantelelemente gegeneinander zu verschieben. Insbesondere dadurch, dass das obere Gehäusemantelelement in das untere Gehäusemantelelement einschiebbar ist, gelingt, durch ein Herausziehen oder aber auch ein Hineinschieben, eine nachträgliche Verschiebung, beispielsweise bei einem notwendigen Angleich des Bodenniveaus. Dies ist bei derzeit im Einsatz befindlichen Gehäusen für Unterflurarmaturen nicht möglich, da diese in der Regel aus Stahl beziehungsweise Stahlblech oder aus Gussmaterial gefertigt sind, was eine Korrosion zur Folge hat.

von vorteil ist es auch, wenn die Gehäusemantelelemente gegeneinander festlegbar, insbesondere kraftschlüssig festlegbar sind. Dazu kann beipsielsweise eine Klemmvorrichtung zwischen den Gehäusemantelelementen angeordnet sein, um diese lösbar fest miteinander zu verbinden. Die Klemmvorrichtung ist dabei beispielsweise als Klemmring ausgebildet, der auf dem unteren Gehäusemantelelement angeordnet wird und der dann das obere Gehäusemantelelement klemmt. Selbstverständlich kann man als Klemmvorrichtung auch eine oder mehrere Schrauben vorsehen, die in dem oberen Gehäusemantelelement am Umfang angeordnet sind, und die dann angezogen werden, wenn das Gehäuse in der richtigen Höhe positioniert ist.

Von Vorteil ist es auch, wenn als Klemmvorrichtung eine als Klemmdichtung ausgebildete Dichtung vorgesehen ist. Diese erfüllt dann beide Funktionen, nämlich das Abdichten und das gleichzeitige Klemmen. Dies stellt eine bevorzugte Varianten dar, da hier der Aufwand relativ gering ist und die Klemmdichtung sowohl dichtet als klemmt. Die Dichtung ist insbesondere auch dazu vorgesehen, dass kein angefülltes Erdreich in den geringen Zwischenraum zwischen dem oberen und unteren Gehäusemantelelement eindringen kann, was gegebenenfalls eine verstellung dann blockieren beziehungsweise erschweren würde. Durch die Dichtung wird dies hundertprozentig verhindert, weshalb auch nach vielen Jahren des Einsatzes ein Verstellen der Gehäusemantelelemente zueinander noch möglich ist.

Eine weiterbildung der zuvor beschriebenen variante sieht vor, dass der Außendurchmesser des oberen Gehäusemantelelementes geringer als der Innendurchmesser des unteren Gehäusemantelelementes ist, so dass eine Klemmvorrichtung und/oder Dichtung zumindest teilweise in einem Zwischenraum zwischen den beiden Gehäusemantelelementen anordenbar ist. Dabei kann es selbstverständlich vorgesehen sein, dass dazu entsprechende Nuten in einem bestimmten Raster an dem Gehäusemantelelement vorzusehen sind. Vorteilhafterweise wird allerdings die Klemmvorrichtung und/oder Dichtung auf den oberen Rand des unteren Gehäusemantelelementes aufgelegt beziehungsweise übergestülpt. Das Spiel ist dabei dann so bemessen, dass die Klemmvorrichtung beziehungsweise die Dichtung das obere Gehäusemantelelement sicher vor einem Abrutschen hält und gegebenenfalls abdichtet.

von Vorteil ist es auch, wenn die Dichtung eine hohe Flexibilität und gute Gleiteigenschaften besitzt. Dies ist insbesondere bei einem Verstellvorgang von Vorteil, da damit die notwendigen Kräfte zur Verstellung etwas reduziert werden können.

Wie bereits erwähnt kann die Klemmvorrichtung und/oder die Dichtung auf den Rand des unteren Gehäusemantelelementes aufgesetzt beziehungsweise aufgesteckt werden. Dabei ist es auch günstig, wenn die Klemmvorrichtung beziehungsweise die Dichtung diesen Rand vollständig überdeckt.

Die Erfindung umfasst allerdings auch eine Lösung, bei der die Klemmvorrichtung und/oder die Dichtung an zumindest einem der Gehäusemantelelemente befestigt beziehungsweise angeformt, zum Beispiel aufgespritzt ist.

Die Erfindung zeichnet sich auch dadurch aus, dass der Flansch auf den oberen Rand beziehungsweise die obere Befestigung des Erdreiches, in dem das Gehäuse versenkt ist, aufsetzbar und/ oder einsetzbar ist, wobei der Flansch insbesondere kraftschlüssig vom Gehäusemantelelement entkoppelt ist. Dieser Flansch kann beispielsweise in einem Schotterbett einbetoniert werden und zwar derart, dass er auf den oberen Rand beziehungsweise über den oberen Rand geschoben wird, allerdings so, dass keine kraftschlüssige Verbindung zwischen dem Flansch und dem oberen Gehäusemantelelement vorhanden ist, um zu vermeiden, dass bei Erschütterungen oder bei nicht ausreichender Befestigung des Flansches oder bei einer gegebenenfalls nicht geplanten höheren Belastung der Flansch das Gehäusemantelelement verschiebt. Dies erreicht man dadurch, dass das Gehäuse zunächst eingebaut und verfüllt wird. Nach dem Verfüllen wird in der Regel verdichtet beziehungsweise es wird lagenweise in bestimmten Abständen eingefüllt und verdichtet. Der obere Bereich wird dann mit nicht-bindigen Baustoffen angefüllt und ebenfalls verdichtet, so dass dann dort ein Betonbett für den Flansch hergestellt werden kann. Erst danach wird dann der Flansch aufgesetzt. Nach dem Abbinden des Betons ist die gewünschte Verbindung mit dem Erdreich beziehungsweise mit der Oberfläche hergestellt, so dass beispielsweise auch Fahrzeuge über den Flansch und den dann eingefügten Deckel fahren können. Sehr wichtig ist die kraftschlüssige Entkopplung von Gehäusemantelelement und Flansch.

wie bereits erwähnt ist es günstig, wenn der Flansch zur Aufnahme von Lasten ausgebildet ist, so dass er von Fahrzeugen im Straßenverkehr überfahren werden kann. Demzufolge können zwei Ausführungsformen des erfindungsgemäßen Gehäuses bezüglich des Flansches vorgesehen sein, indem der Flansch zum einen relativ gering belastbar ist, so dass dieser beispielsweise in einem Erdbodenbereich, wie zum Beispiel in einem Garten, eingebaut werden kann. Zum anderen wird ein Flansch als oberer Abschluss zur Verfügung gestellt, der eben die Verkehrslasten auf einer Strasse aushält und dementsprechend berechnet ist. Auch der Deckel, der in den Flansch eingefügt wird, muß dementsprechend berechnet und ausgebildet sein.

Die Erfindung umfasst selbstverständlich auch eine Lösung, bei der der Deckel derart ausgebildet ist, dass er einen Aufsteckbeziehungsweise Einsteckstutzen aufweist, mittels dessen er über beziehungsweise in das obere Gehäusemantelelement aufbeziehungsweise einsetzbar ist. Auch hier ist zu beachten, dass der Deckel, der keinen Flansch als Auflage besitzt, derart im Erdreich einzubringen ist, dass eine kraftschlüssige Kopplung vermieden wird. Dies kann derart erfolgen, dass neben dem oberen Gehäusemantelteil des Gehäuses ein Schotterbett vorgesehen wird, welches gegebenenfalls mit Beton entsprechend belastbar ausgebildet wurde. Auf diesen Beton wird dann der Deckel aufgelegt, so dass er den oberen Abschluss des erfindungsgemäßen Gehäuses bildet. Diese Ausführungsform ist bevorzugt für den Bereich vorgesehen, der nicht so starken Belastungen ausgesetzt ist. Er läßt sich allerdings, bei entsprechender Untergrundbehandlung, auch im belasteten Bereich einsetzen.

In der Zeichnung ist die Erfindung insbesondere in einem Ausführungsbeispiel schematisch dargestellt. Es zeigen:

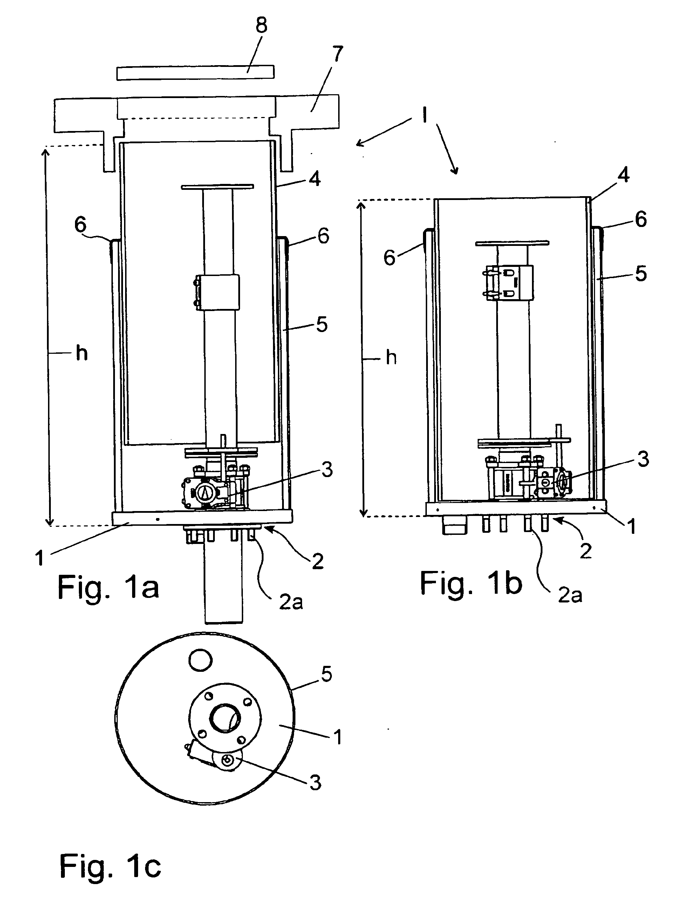

- Fig. 1a-1c: verschiedene Ansichten des erfindungsgemäßen, Gehäuses,

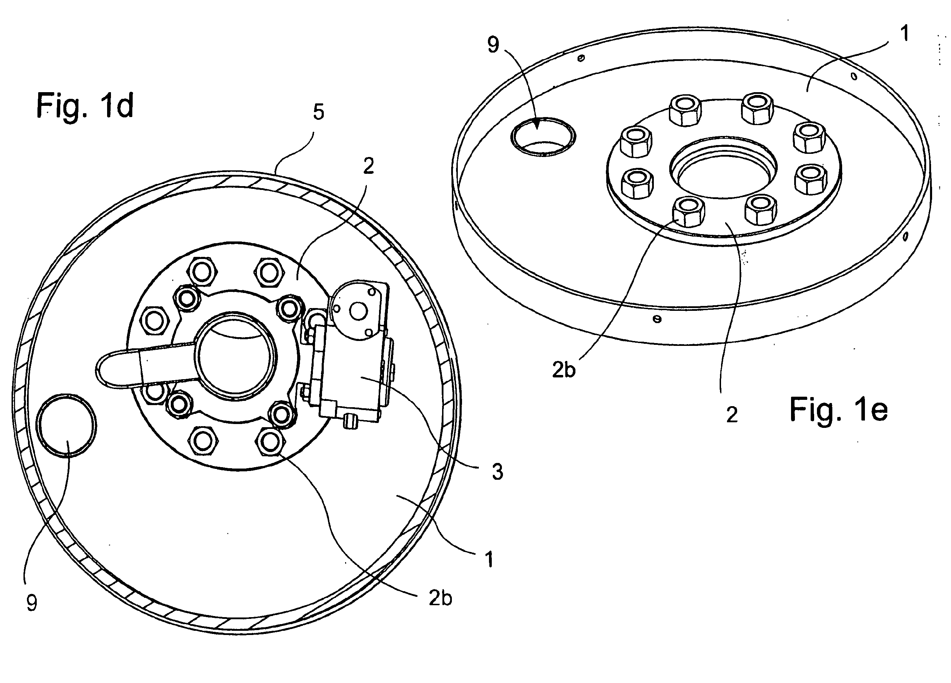

- Fig. 1d-1e: weitere Ausführung der Anschlussplatte für das Gehäuse nach der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

In den Fig. 1a bis 1c sind verschiedene Ansichten einer Ausführungsform für ein erfindungsgemäßes Gehäuse I gezeigt. Die Fig. 1a ist dabei eine Vorderansicht, während die Fig. 1b eine Seitenansicht der in Fig. 1a gezeigten Variante, hier allerdings ohne Flansch 7 und ohne Schachtdeckel 8, zeigt. Die Fig. 1c zeigt eine Draufsicht des erfindungsgemäßen Gehäuses, wobei hier lediglich die Anschlussplatte 1 mit aufgesetzter Armatur und das äußere Gehäusemantelelement 5 gezeigt sind. Wie aus Fig. 1a ersichtlich ist das erfindungsgemäße Gehäuse 1 aus wenigstens einer nach unten weisenden Anschlussplatte 1 gebildet. An dieser Anschlussplatte 1 befindet sich eine Schnittstelle 2 zum Ankoppeln beziehungsweise Anschließen eines Teiles einer Unterflurarmatur 3. Dabei ist in dem Gehäuse I bereits eine Unterflurarmatur 3 gezeigt. Die Schnittstelle 2 ist hier unterhalb der Anschlussplatte 1 vorgesehen. Diese ist dort beispielsweise als Flansch ausgebildet, welcher den Anschluss eines medienführenden Rohres ermöglicht. Der Flansch wird in der gezeigten Ausführungsform der Fig. 1a auf Steckbolzen 2a aufgesteckt und damit oder über nicht gezeigten Muttern befestigt. Auf der Anschlussplatte 1 ist aufgesetzt das untere Gehäusemantelelement 5. In dieses ist das obere Gehäusemantelelement 4 eingeschoben. Dabei ist in Fig. 1a dieses Element zu ca. 2/3 eingeschoben, während es in der Fig. 1b vollständig eingeschoben gezeigt ist.

Die Höhe h bezeichnet die Gesamthöhe des Gehäuses, allerdings ohne den oberen Flansch 7 sowie ohne den Schachtdeckel 8. Der Schachtdeckel 8 ist schematisch angehoben gezeigt, wobei dieser im Endzustand selbstverständlich in den Flansch 7 eingelegt ist, um das Gehäuse 1 komplett zu verschließen. Wie ersichtlich, ist der Flansch 7 nicht direkt mit dem oberen Gehäusemantelelement 4 gekoppelt, sondern es befindet sich ein Zwischenraum zwischen dem Flansch 7 und dem oberen Gehäusemantelelement 4. Ein nicht gezeigtes Beton- oder Schotterbett fängt Lasten, die vom Flansch 7 in das Erdreich eingetragen werden, ab. Aus der Darstellung gemäß der Fig. 1a und 1b geht hervor, dass das obere Gehäusemantelelement 4 in das untere Gehäusemantelelement 5 einschiebbar ist. Um ein Abgleiten beziehungsweise Abrutschen des oberen Gehäusemantelelementes 4 in die unterste Stellung zu verhindern, wenn beispielsweise das Erdbodenniveau höher ist, als in Fig. 1b gezeigt, ist auf dem oberen Rand des unteren Gehäusemantelelementes 5 eine als Klemmdichtung ausgebildete Dichtung 6 vorgesehen. Diese erfüllt sowohl den Zweck des Klemmens des oberen Gehäusemantelelementes 4 als auch den gleichzeitigen Zweck des Abdichtens.

Das Abdichten ist erforderlich, um Eindringen von Erdreich bei Verschieben des oberen Gehäusemantelelementes zu verhindern.

Gegenüber den im Stand der Technik gebräuchlichen Lösungen weist daher die Erfindung den Vorteil auf, dass das obere Gehäusemantelelement 4 in das untere eingeschoben ist. Die meisten Lösungen des Standes der Technik wählen den umgekehrten Weg, nämlich das Überstülpen des oberen Gehäusemantelelementes 4 über das untere Gehäusemantelelement 5. Dabei ergibt es sich, dass das Erdreich beim Herunterschieben verdrängt werden muß, was dazu führt, dass in der Regel komplett ausgeschachtet werden muß. Auch beim Hochziehen kann dies zu Verklemmungen führen, weil dort Erdreich eindringen kann. Durch die erfindungsgemäße Ausgestaltung wird dies komplett verhindert, zum einen durch die Materialwahl der Gehäusemantelelemente 4, 5 und zum anderen durch die Dichtung 6, zusätzlich begünstigt allerdings noch durch das Ineinanderschieben, wie dargestellt.

Die in den Fig. 1a bis 1c gezeigte Unterflurarmatur 3 ist nur beispielhaft zu versehen. Vielmehr lassen sich in das erfindungsgemäße Gehäuse unterschiedlichste Unterflurarmaturen, beispielsweise auch Multifunktionsarmaturen, einsetzen. Durch das Wählen der Schnittstelle 2 an der Anschlußplatte 1, die sowohl nach unten weisend als auch nach innen weisend vorgesehen ist, wird ermöglicht, dass unterschiedlichste Größen und/oder Typen von Unterflurarmaturen dort eingesetzt werden können. Aus den Fig. 1a und 1b wird sehr schön ersichtlich, dass es auf die Höhe der Unterflurarmatur nun nicht mehr ankommt. Vielmehr kann eine Armatur eingesetzt werden, die auch wesentlich geringer in ihrer Höhe ausgebildet ist, als das Gehäuse I selbst. Dadurch, dass das Gehäuse I über den Deckel 8 sehr leicht zugänglich ist, lässt sich auch eine Bedienung, beispielsweise mit entsprechenden Verlängerungshebeln oder - stangen, sehr leicht bewerkstelligen. Die an der zur Medienleitung weisenden Seite der Anschlussplatte 1 vorgesehene Schnittstelle 2 ist hier beispielsweise als rohrförmige Öffnung mit Steckbolzen 2a ausgebildet, die dazu dienen, dass ein Flansch einer Rohrleitung dort übergestülpt und befestigt werden kann.

Diese Ausgestaltung ist allerdings keineswegs einschränkend zu verstehen. Vielmehr wird auf die vorherigen Ausführungen verwiesen, wonach die Schnittstelle höchst unterschiedlich ausgestaltet sein kann.

Die Gehäusehöhe h kann zwischen 700 mm bis 2000 mm variieren. Hier ist die Erfindung aufgrund der Teleskopierbarkeit sehr variabel einsetzbar. Der bei einer kreisförmigen ausgebildeten Anschlussplatte 1 vorgesehene Durchmesser variiert zwischen 400 mm bis 1300 mm. Damit wird ein Quotient aus der Gehäusehöhe h und dem Durchmesser der Anschlussplatte 1 zwischen 0,5 bis 5, vorzugsweise 1,5 und 2,5 beziehungsweise 1 und 1,5 erhalten. Die Erfindung ist hierauf allerdings nicht eingeschränkt, sondern beschreibt hier lediglich Beispiele für bestimmte Typengrößen.

Die Fig. 1d und 1e zeigen eine weitere Ausführungsform beziehungsweise eine weitere Möglichkeit der Ausführung der Anschlussplatte 1 für das Gehäuse I nach der Erfindung. Dabei sind die gleichen Bezugszeichen für bereits vorgestellte Merkmale verwendet worden. Im Gegensatz zu der in den Fig. 1a bis 1c vorgestellten Variante ist hier die Bodenplatte 1 mit der Schnittstelle 2 etwas anders ausgeführt und zwar derart, dass anstelle von Steckbolzen 2a jetzt hier entweder, wie in den Fig. 1d und 1e gezeigt, aufgesetzte beziehungsweise aufgeschweißte Muttern 2b als Verbindungsmittel vorgesehen sind oder aber indem Bohrungen mit Innengewinde verwendet werden. Diese Ausführungsform ist allerdings nicht gezeigt. Die aufgesetzten Muttern an Stelle der Steckbolzen 2a tragen das Bezugszeichen 2b.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Gehäuse, insbesondere Außengehäuse bzw. Schacht für Multifunktionsarmaturen, Unterflurarmaturen, wie z.B. Unterflurhydranten, wobei das Gehäuse beim Einbau stufenlos an das Niveau des Einbauortes bzw. Einbaugeländes anpassbar ist, bestehend aus wenigstens zwei ineinander schiebbaren, vorzugsweise teleskopierbaren und rohrförmig ausgebildeten Gehäusemantelelementen (4, 5), wenigstens einer in Einbaurichtung nach unten weisenden Anschlussplatte (1) und wenigstens einem in Einbaurichtung nach oben weisenden Schachtdeckel (8) und/oder Flansch (7), der den Schachtdeckel (8) aufnimmt, **dadurch gekennzeichnet, dass** an der Anschlussplatte (1) wenigstens eine Schnittstelle (2) zum Ankoppeln bzw. Anschließen zumindest eines Teiles einer Unterflurarmatur (3) vorgesehen, die Schnittsstelle (2) für den Anschluss bzw. die Aufnahme unterschiedlicher Unterflurarmaturen (3) universell ausgebildet ist und die Schnittstelle auf der nach unten, zur Medienleitung weisenden Seite und/oder auf der nach oben, in das Gehäuse weisenden Seite angeordnet ist.

2. Gehäuse nach Anspruch 1, **dadurch gekennzeichnet, dass** die Gehäusemantelelemente (4, 5) aus korrosionsbeständigem Material, wie zum Beispiel aus einem Kunststoffmaterial, vorzugsweise aus Polyäthylen oder PVC, gebildet sind und/oder die Gehäusemantelelemente (4, 5) gegeneinander festlegbar, insbesondere kraftschlüssig festlegbar.

3. Gehäuse nach einem der vorhergehenden Ansprüche, **dadurch gekennzeichnet, dass** eine Klemmvorrichtung zwischen den Gehäusemantelelementen (4, 5) angeordnet ist, um diese lösbar/fest miteinander zu verbinden und/oder als Klemmvorrichtung eine als Klemmdichtung ausgebildete Dichtung (6) vorgesehen ist.

4. Gehäuse nach einem der vorhergehenden Ansprüche, **dadurch gekennzeichnet, dass** die Schnittstelle (2) als Anschlussflansch, Schraubverbindung, Bajonettanschluss oder dergleichen ausgebildet ist.

5. Gehäuse nach einem der vorhergehenden Ansprüche, **dadurch gekennzeichnet, dass** der Quotient aus der Gehäusehöhe (h) und dem Durchmesser der Anschlussplatte (1) zwischen 0,5 bis 5, vorzugsweise 1,5 und 2,5 oder 1 und 1,5 beträgt.

6. Gehäuse nach einem der vorhergehenden Ansprüche, **dadurch gekennzeichnet, dass** die Anschlussplatte (1) aus Edelstahl, vorzugsweise korrosionsgeschütztem Blech oder einem Kunststoffmaterial, beispielsweise aus faserverstärktem Kunststoff gebildet ist.

7. Gehäuse nach einem der vorhergehenden Ansprüche, **dadurch gekennzeichnet, dass** die Anschlussplatte (1) rund bzw. kreisförmig ausgebildet ist und einen Durchmesser zwischen 400 mm bis 1300 mm aufweist und/oder die Gehäusehöhe (h) zwischen 700 mm bis zu 2000 mm beträgt.

8. Gehäuse nach einem der vorhergehenden Ansprüche, **dadurch gekennzeichnet, dass** das Gehäuse (I) einen runden, eckigen, quadratischen oder rechteckigen bzw. ovalen Querschnitt aufweist.

9. Gehäuse nach einem der vorhergehenden Ansprüche, **dadurch gekennzeichnet, dass** das in Einbaurichtung obere Gehäusemantelelement (4) in das untere Gehäusemantelelement (5) einschiebbar ist und/oder der Außendurchmesser des oberen Gehäusemantelelementes (4) dem Innendurchmesser des unteren Gehäusemantelelementes (5) derart angepasst ist, dass das obere Gehäusemantelelement (4) mit einem geringen Spiel, jedoch selbsthemmend, einschiebbar ist.

10. Gehäuse nach einem der vorhergehenden Ansprüche, **dadurch gekennzeichnet, dass** der Außendurchmesser des oberen Gehäusemantelelementes (4) geringer als der Innendurchmesser des unteren Gehäusemantelelementes (5) ist, so dass eine Klemmvorrichtung und/oder Dichtung (6) zumindest teilweise in einem Zwischenraum zwischen den beiden Gehäusemantelelementen (4, 5) anordenbar ist.

11. Gehäuse nach einem der vorhergehenden Ansprüche 3 bis 10, **dadurch gekennzeichnet, dass** die Dichtung (6) eine hohe Flexibilität und gute Gleiteigenschaften besitzt.

12. Gehäuse nach einem der vorhergehenden Ansprüche 3 bis 11, **dadurch gekennzeichnet, dass** die Klemmvorrichtung und/oder die Dichtung (6) auf den Rand des unteren Gehäusemantelelementes (5) aufsetzbar ist bzw. diesen überdeckt.

13. Gehäuse nach einem der vorhergehenden Ansprüche 3 bis 12, **dadurch gekennzeichnet, dass** die Klemmvorrichtung und/oder die Dichtung (6) an zumindest einem der Gehäusemantelelemente (4, 5) befestigt bzw. angeformt, z.B. aufgespritzt ist.

14. Gehäuse nach einem der vorhergehenden Ansprüche, **dadurch gekennzeichnet, dass** der Flansch (7) auf den oberen Rand bzw. die obere Befestigung des Erdreiches, in den das Gehäuse versenkt ist, aufsetzbar und/oder einsetzbar, beispielsweise einbetonierbar ist und der Flansch insbesondere kraftschlüssig vom Gebäudemantelelement entkoppelt ist.

15. Gehäuse nach einem der vorhergehenden Ansprüche, **dadurch gekennzeichnet, dass** der Flansch (7) zur Aufnahme von Lasten ausgebildet ist, so dass er beispielsweise von Fahrzeugen im Straßenverkehr überfahrbar ist und/oder der Deckel (8) einen Aufsteck- bzw. Einsteckstutzen aufweist, mittels dessen er auf oder in das obere Gehäusemantelelemente (4) setzbar ist.

## Claims

1. Casing, in particular exterior casing and/or shaft for multifunctional fittings, underfloor fittings, such as for example underfloor hydrants, wherein the casing can be adapted during installation continuously to the level of the installation spot or the installation terrain, consisting of at least two preferably telescopic and tube-like perimeter casing elements (4, 5) that can be inserted into each other, at least one connecting plate (1) facing downwards in installation direction, and at least one in installation direction upwards pointing shaft cover (8) and/or flange (7) holding the shaft cover (8), **characterized in that** at the connection plate (1) at least one interface (2) is provided for coupling or linking at least one element of an underfloor fitting (3), the interface (2) for linking or holding different underfloor fittings (3) is designed universally, and the interface is arranged on the side facing downwards to the media conduct and/or on the side facing upwards in the casing.

2. Casing according to claim 1, **characterized in that** the elements of the perimeter casing (4, 5) are formed from corrosion-resistant material, such as, for example, plastic material, preferably polyethylene or PVC, and/or the elements of the perimeter casing (4, 5) can be defined relatively to each other, in particular force-fittingly.

3. Casing according to one of the preceding claims, **characterized in that** a clamping device is arranged between the elements of the perimeter casing (4, 5) in order to connect these releasably/fixedly to each other, and/or as clamping device a seal (6) designed as clamping seal is provided.

4. Casing according to one of the preceding claims, **characterized in that** the interface (2) is configured as connection flange, screw connection, bayonet connection or the like.

5. Casing according to one of the preceding claims, **characterized in that** the ratio between the casing height (h) and the diameter of the connection plate (1) is between 0.5 and 5, preferably 1.5 and 2.5, or 1 and 1.5.

6. Casing according to one of the preceding claims, **characterized in that** the connection plate (1) is formed from stainless steel, preferably corrosion-protected sheet or plastic material, for example fiber-reinforced plastic material.

7. Casing according to one of the preceding claims, **characterized in that** the connection plate (1) is formed round or circle-like, and has a diameter between 400 mm and 1,300 mm, and/or the casing height (h) is between 700 mm and 2,000 mm.

8. Casing according to one of the preceding claims, **characterized in that** the casing (I) has a round, angular, square or rectangular or oval cross section.

9. Casing according to one of the preceding claims, **characterized in that** the perimeter casing element (4), on top in installation direction, can be inserted in the bottom perimeter casing element (5), and/or the exterior diameter of the top perimeter casing element (4) is adapted to the interior diameter of the bottom perimeter casing element (5) such that the top perimeter casing element (4) can be inserted with slight clearance, however self locking.

10. Casing according to one of the preceding claims, **characterized in that** the exterior diameter of the top perimeter casing element (4) is less than the interior diameter of the bottom perimeter casing element (5) so that a clamping device and/or seal (6) can be arranged, at least partly, in a space between the two perimeter casing elements (4, 5).

11. Casing according to any of the preceding claims 3 to 10, **characterized in that** the seal (6) has high flexibility and good slip properties.

12. Casing according to any of the preceding claims 3 to 11, **characterized in that** the clamping device and/or seal (6) can be put on or covers the edge of the bottom perimeter casing element (5).

13. Casing according to any of the preceding claims 3 to 12, **characterized in that** the clamping device and/or seal (6) is fastened to or formed at, for example sprayed on, at least one of the perimeter casing elements (4, 5).

14. Casing according to one of the preceding claims, **characterized in that** the flange (7) can be put on and/or inserted, for example concreted on, the top edge or the top fastening of the soil in which the casing has been sunk, and the flange is decoupled, in particular force fitting, from the perimeter casing element.

15. Casing according to one of the preceding claims, **characterized in that** the flange (7) is configured for holding loads such that it can be run over, for example, by vehicles in traffic, and/or the cover (8) has a attach or plug nozzle so that it can be put on or in the top perimeter casing element (4).

## Revendications

1. Boîtier, en particulier un boîtier extérieur ou un puits pour abriter des vannes multifonctionnelles, des vannes sous plancher telles des bouches d'incendie, configuré de façon à permettre d'adapter de manière progressive le boitier au niveau de l'endroit ou du terrain de montage final, consistant en au moins deux éléments d'enveloppe de boitier (4, 5) tubulaires, l'un pouvant être glissé dans l'autre de préférence selon une configuration télescopique, en une plaque de raccordement (1) orientée en état monté vers le bas et en au moins un couvercle de puits (8) situé en état monté en haut et/ou une bride (7) recevant le couvercle de puits (8), **caractérisé en ce qu'**au moins une interface (2) de raccordement ou de branchement d'au moins une partie d'une vanne sous plancher (3) est prévue au niveau de la plaque de raccordement (1) et de façon à ce que l'interface (2) possède une configuration universelle destinée à un raccordement ou une réception d'une variété de vannes sous plancher (3) et **en ce que** l'interface est située sur le côté inférieur orienté vers la conduite de fluides et/ou sur le côté supérieur orienté vers l'intérieur du boîtier.

2. Boîtier selon la revendication 1, **caractérisé en ce que** les éléments d'enveloppe de boîtier (4, 5) sont fabriqués en un matériau résistant aux corrosions, par exemple en matériau plastique, de préférence en polyéthylène ou en PVC et/ou **en ce que** les éléments d'enveloppe de boîtier (4, 5) peuvent être bloqués l'un par rapport à l'autre et de préférence de façon à transmettre des forces.

3. Boîtier selon une des revendications précédentes, **caractérisé en ce qu'**un dispositif de serrage est situé entre les éléments d'enveloppe de boîtier (4, 5) afin de les lier entre eux de façon amovible ou permanent et/ou **en ce qu'**un joint d'étanchéité (6) en forme de joint de serrage sert comme joint d'étanchéité (6).

4. Boîtier selon une des revendications précédentes, **caractérisé en ce que** l'interface (2) est configurée comme une bride de raccordement, un raccord vissé, un raccord à baïonnette ou un raccord similaire.

5. Boîtier selon une des revendications précédentes, **caractérisé en ce que** le rapport entre la hauteur de boîtier (h) et le diamètre de la plaque de raccordement (1) est situé entre 0,5 et 5, de préférence entre 1,5 et 2,5 ou entre 1 et 1,5.

6. Boîtier selon une des revendications précédentes, **caractérisé en ce que** la plaque de raccordement (1) est en acier inoxydable, de préférence en une tôle protégée contre la corrosion en un matériau plastique, par exemple en un plastique renforcé de fibres.

7. Boîtier selon une des revendications précédentes, **caractérisé en ce que** la plaque de raccordement (1) est de forme arrondie ou circulaire d'un diamètre compris entre 400mm et 1300mm et/ou **en ce que** la hauteur du boîtier (h) est comprise entre 700mm et 2000mm.

8. Boîtier selon une des revendications précédentes, **caractérisé en ce que** le boîtier (1) possède une section ronde, carrée, rectangulaire ou ovale.

9. Boîtier selon une des revendications précédentes, **caractérisé en ce qu'**en état monté, l'élément d'enveloppe de boîtier supérieur (4) peut être glissé dans l'élément d'enveloppe de boîtier inférieur (5) et/ou **en ce que** le diamètre extérieur de l'élément d'enveloppe de boîtier supérieur (4) est ajusté au diamètre intérieur de l'élément d'enveloppe du boitier inférieur (5) de façon à permettre d'y glisser l'élément d'enveloppe de boîtier supérieur (4) avec un faible jeu mais autobloquant.

10. Boîtier selon une des revendications précédentes, **caractérisé en ce que** le diamètre extérieur de l'élément d'enveloppe de boîtier (4) supérieur est inférieur au diamètre intérieur de l'élément d'enveloppe de boîtier inférieur (5) afin de pouvoir loger un dispositif de serrage et/ou un joint d'étanchéité (6) au moins partiellement dans un espace se trouvant entre les deux éléments d'enveloppe de boitier (4, 5).

11. Boîtier selon une des revendications précédentes 3 à 10, **caractérisé en ce que** le joint d'étanchéité (6) possède une grande flexibilité et de bonnes propriétés de glissement.

12. Boîtier selon une des revendications précédentes 3 à 11, **caractérisé en ce que** le dispositif de serrage et/ou le joint d'étanchéité (6) peut être posé sur le bord de l'élément d'enveloppe de boîtier inférieur (5) ou à ce qu'il le couvre.

13. Boîtier selon une des revendications précédentes 3 à 12, **caractérisé en ce que** le dispositif de serrage et/ou le joint d'étanchéité (6) est fixé ou adapté ou accolé par injection à au moins un des éléments d'enveloppe de boîtier (4, 5).

14. Boîtier selon une des revendications précédentes, **caractérisé en ce que** la bride (7) peut être posée et/ou introduite ou par exemple coulée dans du béton au niveau du bord supérieur ou au niveau supérieur du renforcement de la terre dans laquelle le boîtier a été introduit et **en ce que** la bride est en particulier découplée au niveau des forces de l'élément d'enveloppe de boîtier.

15. Boîtier selon une des revendications précédentes, **caractérisé en ce que** la bride (7) est configurée pour recevoir des charges de façon à tolérer que des véhicules provenant d'un trafic routier roulent dessus et/ou **en ce que** le couvercle (8) possède un embout pouvant être enfiché sur ou introduit dans l'élément d'enveloppe de boîtier supérieur (4).
